# EUROPÄISCHE PATENTSCHRIFT

(11) **EP 4 484 201 B1**
(45) Veröffentlichungstag und Bekanntmachung des Hinweises auf die Patenterteilung: **31.12.2025**
(21) Anmeldenummer: 24162539.1
(22) Anmeldetag: 11.03.2024
(51) Int. Cl.: B60K 35/28, B60W 30/16, B60W 30/165, B60W 40/10, B60W 50/14, B60L 58/12

(54) **VERFAHREN ZUM ASSISTIEREN EINES FAHRERS BEIM STEUERN EINES ELEKTRISCH BETREIBBAREN KRAFTFAHRZEUGS, ELEKTRONISCHE RECHENEINRICHTUNG UND KRAFTFAHRZEUG**
METHOD FOR ASSISTING A DRIVER IN CONTROLLING AN ELECTRICALLY OPERABLE MOTOR VEHICLE, ELECTRONIC COMPUTING DEVICE AND MOTOR VEHICLE
PROCÉDÉ D'ASSISTANCE D'UN CONDUCTEUR LORS DE LA COMMANDE D'UN VÉHICULE AUTOMOBILE À FONCTIONNEMENT ÉLECTRIQUE, DISPOSITIF DE CALCUL ÉLECTRONIQUE ET VÉHICULE AUTOMOBILE

(30) Priorität: 26.06.2023 DE 102023206005
(43) Veröffentlichungstag der Anmeldung: 01.01.2025
(73) Patentinhaber: VOLKSWAGEN AG, 38440 Wolfsburg (DE)
(72) Erfinder: Bartels, Arne, 38448 Wolfsburg (DE); Krone, Moritz, 38100 Braunschweig (DE); Othmer, Carsten, 38106 Braunschweig (DE)

(56) Entgegenhaltungen:
- DE-A1- 102016 009 129
- DE-A1- 102022 001 572
- US-A1- 2021 382 492
- US-A1- 2023 125 901

## Beschreibung

Die vorliegende Erfindung betrifft ein Verfahren zum Assistieren eines Fahrers beim Steuern eines elektrisch betreibbaren Kraftfahrzeugs, eine elektronische Recheneinrichtung sowie ein Kraftfahrzeug.

Die DE 11 2017 008 199 T5 offenbart ein Verfahren, bei welchem verbleibende Reichweiten für eine Vielzahl von Fahrzeugen von einer Steuerung eines Führungsfahrzeugs empfangen werden. Mittels der Steuerung wird eine Ordnung des Führungsfahrzeugs und der Vielzahl von anderen Fahrzeugen bestimmt, um eine kombinierte Reichweite des Führungsfahrzeugs und der Vielzahl von anderen Fahrzeugen, die als Kolonne fahren, zu erhöhen. Weiterhin wird bei dem Verfahren eine Anweisung von der Steuerung an mindestens einen Teil der Vielzahl von anderen Fahrzeugen zum Neuanordnen gemäß der Ordnung übertragen.

Weiterhin offenbart die DE 10 2018 212 527 A1 ein Verfahren zur Bestimmung eines Leistungs- oder Energiebedarfs mindestens eines Fahrzeugs bei einer Kolonnenfahrt. Bei dem Verfahren werden ein Folgefahrzeug und ein in Fahrrichtung vor dem einen Folgefahrzeug und in Fahrt befindliches Führungsfahrzeug zur Bildung einer Kolonne herangeführt. Während der Dauer des Heranführens des Folgefahrzeugs an das Führungsfahrzeug wird dem Führungsfahrzeug und/oder einem Folgefahrzeug zu mehreren Zeitpunkten ein jeweiliger Abstand zwischen Folgefahrzeug und Führungsfahrzeug und ein jeweiliger Leistungsbedarf und/oder momentaner Energiebedarf im Folgefahrzeug und/oder im Führungsfahrzeug bestimmt. Für das Folgefahrzeug und/oder das Führungsfahrzeug wird aus den bestimmten Werten für Abstand und Leistungsenergiebedarf und/oder Momentanenergiebedarf mindestens eine Kennlinie erzeugt. Für das Folgefahrzeug und/oder das Führungsfahrzeug werden aus der mindestens einer Kennlinie der Leistungsbedarf und/oder der Energiebedarf bei Kolonnenfahrt bestimmt.

Überdies ist aus der DE 10 2020 209 405 A1 ein Verfahren zum Steuern eines Fahrzeugverbands aus mehreren Fahrzeugen mit einem Führungsfahrzeug bekannt. Der Fahrzeugverband führt eine Fortbewegungsfahrt entlang einer Route durch. Dabei wird der Fahrzeugverband von dem Führungsfahrzeug während der Fortbewegungsfahrt entlang der Route angeführt. Mit einer Kommunikationseinheit des Führungsfahrzeugs wird ein Funknetzwerk für den Fahrzeugverband erzeugt. Die mehreren Fahrzeuge des Fahrzeugverbands werden über das Funknetzwerk mit dem Führungsfahrzeug kommunikativ vernetzt. Über das Funknetzwerk wird ein Steuersignal von dem Führungsfahrzeug an die mehreren Fahrzeuge des Fahrzeugverbands übermittelt. In Abhängigkeit von dem Steuersignal werden die mehreren Fahrzeuge des Fahrzeugverbands gesteuert.

Die US 2021/382492 A1 beschreibt ein System zur Steuerung des Fahrens eines Fahrzeugkonvois (Platoon), das aus einem Prozessor, einer Navigationseinheit und einem Fahrregler besteht, die miteinander kommunizieren. Der Prozessor ermittelt auf Basis der verfügbaren Energie bzw. Reichweite jedes Fahrzeugs, der vom Navigationssystem festgelegten Route und der entlang dieser Route gefundenen Ladestationen eine Lade-Strategie, anhand derer der Fahrregler den Konvoi steuert.

Die DE 10 2022 001572 A1 beschreibt ein Verfahren zum Betrieb eines elektrisch angetriebenen Fahrzeugs, bei dem die Reichweite basierend auf der verfügbaren Energiemenge und dem Strömungswiderstand des Fahrzeugs bestimmt wird. Dabei werden Informationen über benachbarte Fahrzeuge erfasst und externe Daten genutzt, um mittels künstlicher Intelligenz, dynamischer aerodynamischer Datenbanken und Schwarmintelligenz autonom zu ermitteln, wie eine Reichweitenerhöhung durch Fahren im Windschatten erreicht werden kann.

Die US 2023/125901 A1 beschreibt eine Vorrichtung, die basierend auf Umgebungsdaten ein vorausfahrendes Fahrzeug als Kandidaten auswählt, den durch Windschattenfahrt erzielbaren Reichweitengewinn des eigenen Fahrzeugs schätzt und diesen Reichweitenvorteil über eine Ausgabeeinrichtung anzeigt.

Die DE 10 2016 009129 A1 beschreibt ein Verfahren zum Betrieb eines Fahrzeugs, das einem vorausfahrenden Fahrzeug im Windschatten mit automatisch geregeltem Abstand folgt und bei Erkennung eines Spurwechsels des vorausfahrenden Fahrzeugs eine situationsabhängige Spurwechselempfehlung ausgibt, woraufhin ein Spurwechsel automatisch oder manuell eingeleitet wird.

Die Aufgabe der vorliegenden Erfindung ist es, eine Lösung zu schaffen, welche ein besonders einfaches energieeffizientes und schnelles Bewegen eines Kraftfahrzeugs entlang einer Fahrtroute ermöglicht.

Diese Aufgabe wird erfindungsgemäß durch die Gegenstände der unabhängigen Ansprüche gelöst. Weitere mögliche Ausgestaltungen der Erfindung sind in den Unteransprüchen

Die Erfindung betrifft ein Verfahren zum Assistieren eines Fahrers beim Steuern eines elektrisch betreibbaren Kraftfahrzeugs. Dieses Kraftfahrzeug umfasst einen elektrischen Antriebsstrang, mittels welchem das Kraftfahrzeug über elektrische Energie angetrieben werden kann. Für das elektrische Antreiben des Kraftfahrzeugs wird elektrische Energie von einer Traktionsbatterie des Kraftfahrzeugs für den elektrischen Antriebsstrang bereitgestellt. Um elektrische Energie für den elektrischen Antriebsstrang des Kraftfahrzeugs bereitzustellen, ist die Traktionsbatterie in jeweiligen Ladevorgängen mit elektrischer Energie aufzuladen. Ist mit dem Kraftfahrzeug eine längere Fahrtroute zurückzulegen, für welche mehr Energie benötigt wird, als von der Traktionsbatterie aufgrund des Ladezustands der Traktionsbatterie bereitgestellt werden kann, dann ist die Traktionsbatterie bei einer Unterbrechung der Fahrt während eines Ladestopps aufzuladen. Das erfindungsgemäße Verfahren ist dafür vorgesehen, zu ermöglichen, dass das Kraftfahrzeug mit besonders wenigen Ladestopps entlang einer Fahrtroute bewegt werden kann, wodurch das Kraftfahrzeug die Fahrtroute besonders schnell zurücklegen kann.

Hierfür ist es bei dem Verfahren vorgesehen, dass mittels einer elektronischen Recheneinrichtung des Kraftfahrzeugs eine Fahrtroute des Kraftfahrzeugs ermittelt wird. Diese Fahrtroute des Kraftfahrzeugs kann insbesondere anhand von Navigationsdaten einer Navigationseinrichtung des Kraftfahrzeugs ermittelt werden. Beispielsweise kann die Fahrtroute anhand eines durch die Navigationsdaten charakterisierten Startorts und eines Zielorts für die Fahrtroute ermittelt werden. Es ist möglich, dass die Navigationseinrichtung des Kraftfahrzeugs anhand des Standorts und des Zielorts die Fahrtroute festlegt und die diese festgelegte Fahrtroute charakterisierenden Navigationsdaten für die elektronische Recheneinrichtung bereitstellt.

Weiterhin ist es bei dem Verfahren vorgesehen, dass mittels der elektronischen Recheneinrichtung für die ermittelte Fahrtroute ein Energieverbrauch des Kraftfahrzeugs ermittelt wird. Dieser Energieverbrauch des Kraftfahrzeugs kann insbesondere anhand von Energieverbrauchsdaten des Kraftfahrzeugs ermittelt werden. Die Energieverbrauchsdaten können den Energieverbrauch des Kraftfahrzeugs pro zurückgelegtem Kilometer charakterisieren. Weiterhin können die Energieverbrauchsdaten jeweilige Charakteristika der Fahrtroute, wie beispielsweise Steigung und Geschwindigkeitsverläufe, welche beispielsweise durch Geschwindigkeitsbegrenzungen bedingt sind, berücksichtigen.

Weiterhin ist es bei dem Verfahren vorgesehen, dass anhand von Ladezustandsdaten ein Ladezustand der Traktionsbatterie des Kraftfahrzeugs ermittelt wird. Es wird somit ermittelt, wie voll geladen die Traktionsbatterie des Kraftfahrzeugs ist. Der Ladezustand der Traktionsbatterie charakterisiert eine in der Traktionsbatterie eingespeicherte, für das Antreiben des Kraftfahrzeugs zur Verfügung stehende Menge an elektrischer Energie.

Weiterhin ist es bei dem Verfahren vorgesehen, dass anhand der Fahrtroute, des Energieverbrauchs und des Ladezustands ermittelt wird, ob bei einer Windschattenfahrt durch Energieeinsparung ein Ladestopp vermieden werden kann. Das bedeutet, dass überprüft wird, ob im Rahmen einer Windschattenfahrt genug Energie beim Antreiben des Kraftfahrzeugs eingespart werden kann, um einen ohne die Windschattenfahrt für das Zurücklegen der Fahrtroute durchzuführenden Ladestopp zu vermeiden. Hierbei kann mit einbezogen werden, wie die Windschattenfahrt zu sein hat, insbesondere hinsichtlich Größe eines Führungsfahrzeug für die Windschattenfahrt, Fahrgeschwindigkeit, Abstand zu dem Führungsfahrzeug sowie Dauer der Windschattenfahrt, um den wenigstens einen Ladestopp einzusparen. Wird mittels der elektronischen Recheneinrichtung festgestellt, dass bei der Windschattenfahrt durch Energieeinsparung ein Ladestopp vermieden werden kann, dann wird mittels der elektronischen Recheneinrichtung ausgelöst, dass dem Fahrer vorgeschlagen wird, die Windschattenfahrt durchzuführen. Wird somit mittels der elektronischen Recheneinrichtung ermittelt, dass bei Durchführen einer Windschattenfahrt mit spezifischen Werten für die genannten Eigenschaften der Windschattenfahrt der wenigstens eine Ladestopp eingespart werden kann, dann wird dem Fahrer des Kraftfahrzeugs vorgeschlagen, eine derartige Windschattenfahrt durchzuführen. Hierfür können dem Fahrer die ermittelten spezifischen Werte für die Eigenschaften der für das Einsparen des wenigstens einen Ladestopps geeigneten Windschattenfahrt ausgegeben werden. Hierbei löst die elektronische Recheneinrichtung aus, dass der Vorschlag zum Durchführen der Windschattenfahrt und gegebenenfalls zusätzlich die ermittelten Werte für die Eigenschaften der Windschattenfahrt dem Fahrer mittels einer Ausgabeeinrichtung des Kraftfahrzeugs ausgegeben werden. Hierbei können der Vorschlag zum Durchführen der Windschattenfahrt und gegebenenfalls zusätzlich die Werte für die ermittelten Parameter der Windschattenfahrt dem Fahrer akustisch und/oder haptisch und/oder visuell ausgegeben werden. Das Verfahren ermöglicht somit, dass für den Fall, dass mittels einer Windschattenfahrt wenigstens ein Ladestopp des Kraftfahrzeugs entlang der Fahrtroute eingespart werden kann, der Fahrer über das Potential des Einsparens des Ladestopps informiert wird. Infolgedessen kann der Fahrer das Kraftfahrzeug derart steuern, dass dieses eine Windschattenfahrt, insbesondere die Windschattenfahrt mit den spezifischen Werten für die beschriebenen Eigenschaften der Windschattenfahrt, durchführt. Hierdurch wird ermöglicht, dass das Kraftfahrzeug besonders schnell entlang der Fahrtroute bewegt wird, da eine zeitliche Verzögerung des Kraftfahrzeugs durch wenigstens einen Ladestopp entlang der Fahrtroute vermieden werden kann.

In einer möglichen Weiterbildung der Erfindung ist es vorgesehen, dass nach Empfangen einer Benutzereingabe vom Fahrer, welche eine Anweisung zum Durchführen der Windschattenfahrt charakterisiert, mittels der elektronischen Recheneinrichtung ein Führungsfahrzeug für die Windschattenfahrt automatisiert ausgewählt wird und/oder das Kraftfahrzeug automatisiert in eine Folgefahrt hinter das Führungsfahrzeug gebracht wird und/oder ein Abstand des Kraftfahrzeugs zu dem Führungsfahrzeug während der Windschattenfahrt automatisiert eingestellt wird. Die elektronische Recheneinrichtung kann insbesondere Teil eines Fahrerassistenzsystems des Kraftfahrzeugs sein. Alternativ zu dem automatisierten Auswählen des Führungsfahrzeugs kann das Führungsfahrzeug in Abhängigkeit von einer Benutzereingabe des Fahrers ausgewählt werden und somit durch den Fahrer des Kraftfahrzeugs ausgewählt werden. Alternativ zu dem automatisierten Einstellen der Folgefahrt des Kraftfahrzeugs hinter das Führungsfahrzeug kann das Kraftfahrzeug manuell vom Fahrer in Folgefahrt hinter das Führungsfahrzeug gesteuert werden. Alternativ zu dem automatisierten Einstellen des Abstands des Kraftfahrzeugs zu dem Führungsfahrzeug während der Windschattenfahrt kann der Abstand des Kraftfahrzeugs zu dem Führungsfahrzeug während der Windschattenfahrt manuell vom Fahrer eingestellt werden. Das bedeutet, dass der Fahrer das Kraftfahrzeug während der Windschattenfahrt manuell längssteuern kann. Je mehr der beschriebenen Schritte automatisiert durchgeführt werden, desto komfortabler kann für den Fahrer des Kraftfahrzeugs die Windschattenfahrt initiiert beziehungsweise durchgeführt werden. Bevorzugt der Fahrer jedoch die Kontrolle über die Auswahl des Führungsfahrzeugs oder das Einordnen des Kraftfahrzeugs hinter das Führungsfahrzeug oder das Steuern des Abstands des Kraftfahrzeugs zu dem Führungsfahrzeug bei der Windschattenfahrt selbst bestimmen, dann können einzelne oder sämtliche der beschriebenen Schritte manuell vom Fahrer durchgeführt werden.

Bei dem automatisierten Einstellen des Abstands des Kraftfahrzeugs zu dem Führungsfahrzeug wird das Kraftfahrzeug automatisiert längsgesteuert indem der Abstand beispielsweise von einer Geschwindigkeitsregelanlage eingestellt wird, welche auch als adaptive Geschwindigkeitsregelung beziehungsweise auf Englisch Adaptive Cruise Control bezeichnet werden kann. Für das automatisierte Steuern des Kraftfahrzeugs in Folgefahrt hinter das Führungsfahrzeug wird zumindest die Quersteuerung, insbesondere sowohl die Quersteuerung als auch die Längssteuerung des Kraftfahrzeugs, automatisiert durchgeführt.

In einer weiteren möglichen Ausgestaltung der Erfindung ist es vorgesehen, dass mittels der elektronischen Recheneinrichtung ausgelöst wird, dass dem Fahrer zusätzlich zum Vorschlagen der Windschattenfahrt angezeigt wird, welcher Art von Führungsfahrzeug bei der Windschattenfahrt gefolgt werden soll und/oder welche Geschwindigkeit das auszuwählende Führungsfahrzeug aufweisen soll und/oder mit welchem Abstand dem Führungsfahrzeug während der Windschattenfahrt gefolgt werden soll und/oder wie viel Energie bei der Windschattenfahrt auf der Fahrtroute eingespart werden kann und/oder wie viele Ladestopps aufgrund der Windschattenfahrt vermieden werden können und/oder wie viel Fahrtzeit aufgrund des eingesparten Ladestopps eingespart werden kann. Die jeweiligen Informationen können dem Fahrer des Kraftfahrzeugs insbesondere mittels der Ausgabeeinrichtung des Kraftfahrzeugs ausgegeben werden. Dadurch, dass dem Fahrer angezeigt wird, welcher Art von Führungsfahrzeug gefolgt werden soll und/oder welche Geschwindigkeit das auszuwählende Führungsfahrzeug aufweisen soll, kann der Fahrer das Führungsfahrzeug besonders informiert selbst auswählen. Insbesondere wenn mehrere mögliche Führungsfahrzeuge in der Umgebung des Kraftfahrzeugs angeordnet sind, kann der Fahrer anhand der für ihn ausgegebenen Informationen dasjenige Führungsfahrzeug auswählen, welches sich am besten für die Windschattenfahrt eignet beziehungsweise beim Folgen von welchem im Rahmen der Windschattenfahrt am meisten Energie eingespart werden kann. Dadurch, dass dem Fahrer ausgegeben wird, mit welchem Abstand er dem Führungsfahrzeug für eine maximale Energieeinsparung im Rahmen der Windschattenfahrt folgen soll, ist es möglich, dass der Fahrer selbst manuell den Abstand durch Längssteuerung des Kraftfahrzeugs zu dem Führungsfahrzeug einstellt und somit das Gefühl hat, die Situation vollständig zu kontrollieren. Gleichzeitig kann durch Informieren des Fahrers hinsichtlich des Abstands erreicht wird, dass die Windschattenfahrt mit einem Abstand durchgeführt wird, welcher ein Einsparen von besonders viel Energie beim Durchführen der Windschattenfahrt ermöglicht. Dadurch, dass dem Fahrer ausgegeben wird, wie viel Energie bei der Windschattenfahrt auf der Fahrtroute eingespart werden kann und/oder wie viele Ladestopps aufgrund der Windschattenfahrt vermieden werden können und/oder wie viel Fahrtzeit aufgrund des eingesparten Ladestopps eingespart werden kann, kann eine besonders hohe Akzeptanz des Fahrers für die Windschattenfahrt erreicht werden. Infolgedessen ist die Wahrscheinlichkeit besonders hoch, dass der Fahrer die Windschattenfahrt durchführt beziehungsweise der Durchführung der Windschattenfahrt zustimmt.

In diesem Zusammenhang kann es insbesondere vorgesehen sein, dass der Abstand absolut als Längenangabe oder als Zeitangabe in Form einer Zeitlücke vorgegeben wird. Als Abstand kann somit beispielsweise vorgegeben werden, dass das Kraftfahrzeug bei der Windschattenfahrt dem Führungsfahrzeug mit einem Abstand von zehn Metern folgen soll. Hierbei ist die Länge des Abstands unabhängig von der Geschwindigkeit des Fahrzeugs und des Führungsfahrzeugs. Bei der Zeitlücke handelt es sich um die Zeitspanne, in der zwei aufeinanderfolgende Fahrzeuge einen bestimmten Punkt passieren. Messpunkte können an jeweiligen Fahrzeug die Vorder- oder die Rückseite sein. Hierbei kann entweder die Zeiteingabe als Nettozeitlücke oder als Bruttozeitlücke vorgegeben werden. Die Nettozeitlücke umfasst den zeitlichen Abstand zwischen der Rückseite eines voranfahrenden Fahrzeugs und der Vorderseite eines nachfolgenden Fahrzeugs. Die Bruttozeitlücke umfasst den zeitlichen Abstand zwischen der Vorderseite eines voranfahrenden Fahrzeugs und der Vorderseite eines nachfolgenden Fahrzeugs. Die Bruttozeitlücke ist also die Nettozeitlücke plus die der Länge des voranfahrenden Fahrzeugs entsprechende Zeit. Mit anderen Worten hängt die Abstandsstrecke zwischen dem Führungsfahrzeug und dem Folgefahrzeug von einer Geschwindigkeit des Führungsfahrzeugs ab, wenn der Abstand in Form der einzuhaltenden Zeitlücke vorgegeben ist.

Mittels der elektronischen Recheneinrichtung kann ausgelöst werden, dass dem Fahrer der während der Windschattenfahrt zu dem Führungsfahrzeug einzuhaltende Abstand in Form der Zeitlücke oder in Form der absoluten Längenangabe ausgegeben wird. Das Vorgeben des Abstands in Form der absoluten Längenangabe ermöglicht für den Fahrer ein besonders einfaches Einstellen des Abstands zwischen dem Kraftfahrzeug und dem Führungsfahrzeug, da der Fahrer meist eine Vorstellung davon hat, wie lang bestimmte absolute Strecken sind. Das Vorgeben des Abstands in Form der Zeitlücke ermöglicht, dass der Abstand zwischen dem Kraftfahrzeug und dem Führungsfahrzeug in Abhängigkeit von der Geschwindigkeit des Führungsfahrzeugs eingestellt wird. Je schneller das Führungsfahrzeug fährt, desto größer ist der absolute Abstand zwischen dem Führungsfahrzeug und dem Folgefahrzeug. Es können somit jeweilige während einer Reaktionszeit des Fahrers zurückgelegte, von der Geschwindigkeit abhängige Strecken sowie jeweilige von der Geschwindigkeit abhängige Bremsstrecken des Kraftfahrzeugs bei dem vorgegebenen Abstand durch Wahl einer entsprechenden Zeitlücke berücksichtigt sein, wodurch eine Gefahr einer Kollision zwischen dem Führungsfahrzeug und dem Kraftfahrzeug beispielsweise bei einem plötzlichen Bremsen des Führungsfahrzeugs besonders gering gehalten werden kann.

In einer weiteren möglichen Ausgestaltung der Erfindung ist es vorgesehen, dass als das Führungsfahrzeug für die Windschattenfahrt ein weiteres Kraftfahrzeug in Abhängigkeit von wenigstens einem der im Folgenden genannten Kriterien ausgewählt wird. Ein erstes Kriterium ist die Klassifizierung des weiteren Kraftfahrzeugs als Personenkraftwagen oder als Lastkraftwagen. Jeweilige Eigenschaften von Windschatten jeweiliger Kraftfahrzeuge hängen von einer Kontur der jeweiligen Kraftfahrzeuge ab. Je nach Größe und Konturverlauf können sich somit für unterschiedliche Kraftfahrzeuge unterschiedliche Windschatten ergeben. Da Lastkraftwagen untereinander üblicherweise einen ähnlichen Aufbau aufweisen und Personenkraftwagen untereinander üblicherweise einen ähnlichen Aufbau aufweisen, sind Lastkraftwagen untereinander hinsichtlich jeweiliger Strömungseigenschaften von entlang der Außenoberfläche strömender Luft und sich dadurch ergebender Windschatten sehr ähnlich und Personenkraftwagen sind untereinander hinsichtlich Strömungseigenschaften von entlang der Außenkontur der Personenkraftwagen strömender Luft und daraus resultierender Windschatten einander sehr ähnlich. Es kann somit für das Führungsfahrzeug beispielsweise vorgegeben sein, dass als Führungsfahrzeug ein Lastkraftwagen auszuwählen ist. Beispielsweise kann dem Fahrer ausgegeben werden, dass dieser als Führungsfahrzeug entweder einen Lastkraftwagen oder einen Personenkraftwagen auswählen soll. Hierdurch kann sichergestellt werden, dass der Fahrer ein für die Windschattenfahrt besonders gut geeignetes Führungsfahrzeug auswählt.

Als zweites Kriterium kann eine Größe des weiteren Kraftfahrzeugs vorgegeben sein. Es kann somit vorgegeben sein, welche Höhe und/oder Breite das Kraftfahrzeug, welches als Führungsfahrzeug auszuwählen ist, idealerweise aufweisen soll. Als drittes Kriterium kann eine Geschwindigkeit des weiteren Kraftfahrzeugs angegeben werden. Das bedeutet, dass das Führungsfahrzeug anhand seiner Geschwindigkeit ausgewählt wird. Beispielsweise kann vorgegeben sein, dass ein Führungsfahrzeug auszuwählen ist, welches wenigstens eine Geschwindigkeit von 100 Kilometern pro Stunde aufweist. Als viertes Kriterium kann ein Fahrstil des weiteren Kraftfahrzeugs vorgegeben sein. Beispielsweise kann vorgegeben sein, dass als Führungsfahrzeug ein Kraftfahrzeug auszuwählen ist, welches besonders gleichmäßig fährt und somit besonders selten zwischen Beschleunigen und Verzögern wechselt beziehungsweise besonders wenige Spurwechsel durchführt. Durch das besonders gleichmäßige Fahren des Führungsfahrzeugs kann die Windschattenfahrt besonders einfach für einen besonders langen Zeitraum aufrechterhalten werden. Als fünftes Kriterium kann eine Minimalgröße eines zum Einscheren zur Verfügung stehenden Bereichs hinter dem weiteren Kraftfahrzeug vorgegeben sein. Je weniger Platz hinter dem weiteren Kraftfahrzeug zur Verfügung steht, desto schwieriger kann es sein, hinter dem Führungsfahrzeug einzuscheren, gleichzeitig den vorgegebenen Abstand zu dem Führungsfahrzeug einzuhalten und eine Kollision mit dem Führungsfahrzeug nachfolgenden Fahrzeugen zu vermeiden. Je größer der zum Einscheren zur Verfügung stehende Bereich hinter dem weiteren Kraftfahrzeug ist, desto einfacher kann das Kraftfahrzeug in Folgefahrt mit dem weiteren Kraftfahrzeug für die Windschattenfahrt gebracht werden.

In diesem Zusammenhang kann es insbesondere vorgesehen sein, dass die Größe des weiteren Kraftfahrzeugs mittels einer Kameraeinrichtung des Kraftfahrzeugs ermittelt wird und/oder die Geschwindigkeit mittels einer Radareinrichtung des Kraftfahrzeugs ermittelt wird und/oder der zum Einscheren zur Verfügung stehende Bereich hinter dem weiteren Kraftfahrzeug mittels der Kameraeinrichtung und der Radareinrichtung ermittelt wird. Es können somit die Kameraeinrichtung und/oder die Radareinrichtung des Kraftfahrzeugs genutzt werden, um die Umgebung des Kraftfahrzeugs auf potenzielle Führungsfahrzeuge hin zu überprüfen. Mittels der Kameraeinrichtung und/oder der Radareinrichtung können die Umgebung des Kraftfahrzeugs charakterisierende Daten, insbesondere weitere Kraftfahrzeuge in der Umgebung des Kraftfahrzeugs charakterisierende Daten, erfasst werden, anhand von welchen ermittelt werden kann, insbesondere mittels der elektronischen Recheneinrichtung, ob in der Umgebung des Kraftfahrzeugs ermittelte weitere Kraftfahrzeuge sich als Führungsfahrzeug für die Windschattenfahrt eignen. Beispielsweise kann die Größe des weiteren Kraftfahrzeugs ermittelt werden, indem aus mittels der Kameraeinrichtung aufgezeichneten Bilddaten mittels einer Bildverarbeitungseinrichtung die Größe des weiteren Kraftfahrzeugs ermittelt wird. Mittels der Radareinrichtung des Kraftfahrzeugs kann beispielsweise der Abstand des Kraftfahrzeugs zu dem weiteren Kraftfahrzeug anhand von Radarstrahlen ermittelt werden, wobei die Geschwindigkeit des weiteren Kraftfahrzeugs insbesondere in Abhängigkeit von einer mittels der Radarstrahlen ermittelten Relativgeschwindigkeit des weiteren Kraftfahrzeugs zu dem Kraftfahrzeug ermittelt werden kann. Der zum Einscheren zur Verfügung stehende Bereich hinter dem weiteren Kraftfahrzeug kann beispielsweise anhand von mittels der Kameraeinrichtung aufgezeichneten Bilddaten über die Bildverarbeitungseinrichtung identifiziert werden. Mittels der Radareinrichtung können ein Abstand des Kraftfahrzeugs zu dem Führungsfahrzeug und ein Abstand von Folgefahrzeugen zu dem weiteren Kraftfahrzeug ermittelt werden. Darüber hinaus kann anhand der Bilddaten festgestellt werden, wie weitere Fahrzeuge relativ zu dem als Führungsfahrzeug infrage kommenden weiteren Kraftfahrzeug angeordnet sind, woraus wiederum ermittelt werden kann wie groß sich der zum Einscheren zur Verfügung stehende Bereich hinter dem weiteren Kraftfahrzeug erstreckt. Mittels der Kameraeinrichtung beziehungsweise der Radareinrichtung können die Größe des weiteren Kraftfahrzeugs beziehungsweise die Geschwindigkeit des weiteren Kraftfahrzeugs beziehungsweise der zum Einscheren zur Verfügung stehende Bereich hinter dem weiteren Kraftfahrzeug besonders präzise ermittelt werden.

In einer weiteren möglichen Ausgestaltung der Erfindung ist es vorgesehen, dass während der Windschattenfahrt eine eingesparte Energiemenge des Kraftfahrzeugs überprüft wird und eine Aktion ausgelöst wird, wenn festgestellt wird, dass die eingesparte Energiemenge nicht ausreicht, um einen Ladestopp einzusparen. Das bedeutet, dass während der Windschattenfahrt überprüft wird, ob die für die Windschattenfahrt vorausgesagte einzusparende Energiemenge tatsächlich eingespart werden kann. Kann die für die Windschattenfahrt prognostizierte einzusparende Energiemenge bei der tatsächlich durchgeführten Windschattenfahrt nicht eingespart werden, dann kann der wenigstens eine Ladestopp gegebenenfalls nicht vermieden werden. Infolgedessen reagiert die elektronische Recheneinrichtung mit dem Auslösen der Aktion. Hierdurch kann eine Gefahr eines Liegenbleibens des Kraftfahrzeugs entlang der Fahrtroute aufgrund von nicht ausreichend von der Traktionsbatterie bereitgestellter elektrischer Energie besonders gut vermieden werden.

In einer möglichen Weiterbildung der Erfindung ist es vorgesehen, dass als Aktion die Windschattenfahrt automatisiert abgebrochen wird und/oder ein neues Führungsfahrzeug für eine weitere Windschattenfahrt gesucht und ausgewählt wird und/oder eine Lademöglichkeitsinformation für den Fahrer ausgegeben wird, welche wenigstens eine Ladestation charakterisiert. Alternativ oder zusätzlich kann als Aktion mittels der elektronischen Recheneinrichtung ausgelöst werden, dass über die Ausgabeeinrichtung dem Fahrer eine Abbruchempfehlung für die Windschattenfahrt ausgegeben wird, welche eine Empfehlung für ein Abbrechen der Windschattenfahrt charakterisiert. Durch das Ausgeben der Lademöglichkeitsinformation für den Fahrer kann der Fahrer die Ladestation ansteuern, wodurch das Kraftfahrzeug an der Ladestation mit elektrischer Energie versorgt werden kann. Das bedeutet, dass an der Ladestation die Traktionsbatterie des Kraftfahrzeugs wieder aufgeladen werden kann, um das Fahren entlang der Fahrtroute fortzusetzen und sicherzugehen, dass eine Gefahr eines Liegenbleibens des Kraftfahrzeugs entlang der Fahrtroute aufgrund von nicht genügend in der Traktionsbatterie für das Antreiben des Kraftfahrzeugs vorhandener Energie besonders gering gehalten werden kann. Wird festgestellt, dass die Windschattenfahrt nicht ausreicht, um ausreichend Energie einzusparen, damit ein Ladestopp vermieden werden kann, dann wird die Windschattenfahrt abgebrochen, da deren Zweck nicht erfüllt wird. Wird im Rahmen der Überprüfung festgestellt, dass durch eine Windschattenfahrt mit einem anderen Führungsfahrzeug gegebenenfalls doch noch der Ladestopp eingespart werden kann, dann wird das neue Führungsfahrzeug für die weitere Windschattenfahrt gesucht und dem Fahrer für die weitere Windschattenfahrt vorgeschlagen oder automatisiert für die weitere Windschattenfahrt ausgewählt. Hierdurch kann ermöglicht werden, dass der Ladestopp doch noch eingespart werden kann und hierdurch das Kraftfahrzeug besonders schnell die Fahrtroute zurücklegen kann.

Die Erfindung betrifft des Weiteren eine elektronische Recheneinrichtung für ein Kraftfahrzeug, welche dazu eingerichtet ist, ein Verfahren, wie es bereits im Zusammenhang mit dem erfindungsgemäßen Verfahren beschrieben worden ist, durchzuführen. Weiterhin betrifft die Erfindung ein Kraftfahrzeug mit einer elektronischen Recheneinrichtung, wie sie bereits im Zusammenhang mit der elektronischen Recheneinrichtung beschrieben worden ist. Das Kraftfahrzeug umfasst eine Traktionsbatterie sowie einen elektrischen Antriebsstrang, mittels welchem das Kraftfahrzeug mit elektrischer Energie aus der Traktionsbatterie angetrieben werden kann. Es handelt sich somit bei dem Kraftfahrzeug um ein Elektrofahrzeug oder um ein Hybridfahrzeug. Bei dem Kraftfahrzeug handelt es sich insbesondere um einen Kraftwagen, insbesondere um einen Personenkraftwagen.

Die Zeichnung zeigt in:
- Fig. 1: ein Verfahrensschema für ein Verfahren zum Assistieren eines Fahrers beim Steuern eines elektrisch betreibbaren Kraftfahrzeugs;
- Fig. 2: ein Ablaufschema für eine Situation, bei welcher einem Fahrer eines Kraftfahrzeugs beim Steuern des Kraftfahrzeugs mittels des beschriebenen Verfahrens assistiert wird; und
- Fig. 3: eine Anzeige einer visuellen Ausgabeeinrichtung des Kraftfahrzeugs.

Gleiche oder funktionsgleiche Elemente sind in den Figuren mit den gleichen Bezugszeichen versehen.

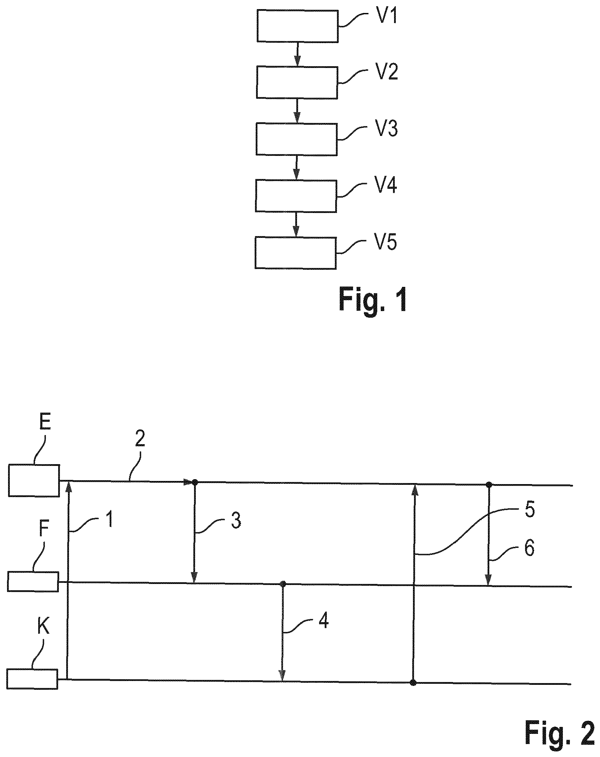

In Fig. 1 ist ein Verfahrensschema für ein Verfahren zum Assistieren eines Fahrers F beim Steuern eines elektrisch betreibbaren Kraftfahrzeugs gezeigt. Das Verfahren ist insbesondere mittels einer elektronischen Recheneinrichtung des Kraftfahrzeugs durchführbar. In einem ersten Verfahrensschritt V1 des Verfahrens ist es vorgesehen, dass eine Fahrtroute des Kraftfahrzeugs ermittelt wird. In einem zweiten Verfahrensschritt V2 des Verfahrens ist es vorgesehen, dass für die ermittelte Fahrtroute ein Energieverbrauch des Kraftfahrzeugs ermittelt wird. In einem dritten Verfahrensschritt V3 des Verfahrens ist es vorgesehen, dass anhand von Ladezustandsdaten ein Ladezustand einer Traktionsbatterie des Kraftfahrzeugs ermittelt wird. In einem vierten Verfahrensschritt V4 ist es vorgesehen, dass anhand der Fahrtroute, des Energieverbrauchs und des Ladezustands ermittelt wird, ob bei einer Windschattenfahrt durch Energieeinsparung ein Ladestopp vermieden werden kann. In einem fünften Verfahrensschritt V5 des Verfahrens ist es vorgesehen, dass, falls ermittelt wird, dass bei der Windschattenfahrt durch Energieeinsparung ein Ladestopp vermieden werden kann, ausgelöst wird, dass dem Fahrer F vorgeschlagen wird, die Windschattenfahrt durchzuführen.

Dem Fahrer F kann mittels einer Ausgabeeinrichtung 12 des Kraftfahrzeugs zusätzlich zum Vorschlagen der Windschattenfahrt ausgegeben werden, welche Art von Führungsfahrzeug 10 bei der Windschattenfahrt durchgeführt werden soll. Alternativ oder zusätzlich kann dem Fahrer F ausgegeben werden, welche Geschwindigkeit das auszuwählende Führungsfahrzeug 10 aufweisen soll. Weiterhin alternativ oder zusätzlich kann dem Fahrer F ausgegeben werden, mit welchem Abstand dem Führungsfahrzeug 10 während der Windschattenfahrt gefolgt werden soll. Weiterhin alternativ oder zusätzlich kann dem Fahrer F ausgegeben werden, wie viel Energie bei der Windschattenfahrt auf der Fahrtroute eingespart werden kann. Weiterhin alternativ oder zusätzlich kann dem Fahrer F ausgegeben werden, wie viele Ladestopps aufgrund der Windschattenfahrt vermieden werden können. Weiterhin alternativ oder zusätzlich kann dem Fahrer F ausgegeben werden, wie viel Fahrtzeit aufgrund der eingesparten Ladestopps eingespart werden kann. Der Abstand für die Windschattenfahrt, welche das Kraftfahrzeug zu dem Führungsfahrzeug 10 einhalten soll, kann absolut als Längenangabe oder als Zeitlücke vorgegeben werden.

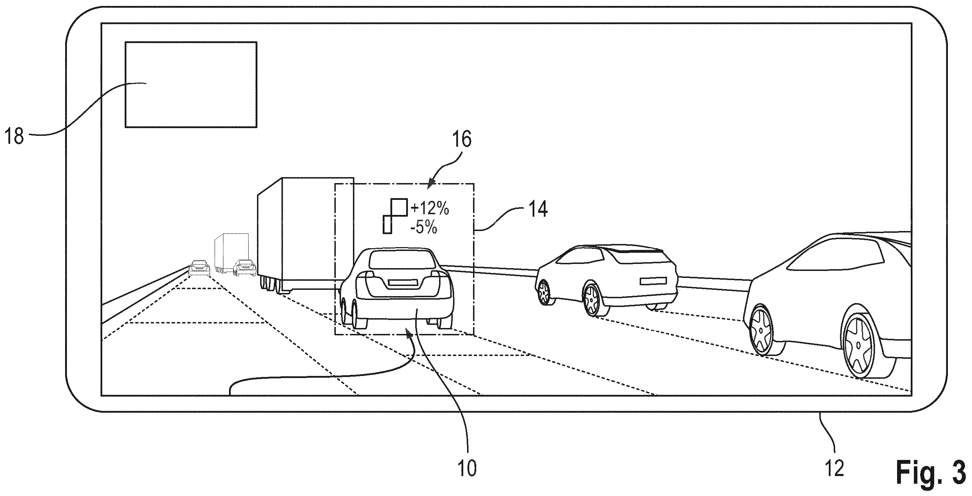

In Fig. 3 ist eine mögliche Anzeige der Ausgabeeinrichtung 12 des Kraftfahrzeugs dargestellt, in welcher ein mögliches Führungsfahrzeug 10 für die Windschattenfahrt mit einer Markierung 14 versehen ist. Zusätzlich wird vorliegend mittels eines Balkendiagramms 16 angezeigt, wie viele Spareffekte sich bei der Windschattenfahrt hinter diesem markierten Führungsfahrzeug 10 voraussichtlich ergeben würden. Weiterhin kann mittels der Ausgabeeinrichtung 12, wie in Fig. 3 gezeigt ist, ein Bestätigungsknopf 18 als Softkey angezeigt werden. Die Ausgabeeinrichtung 12 kann eine berührempfindliche Oberfläche aufweisen, sodass über die berührempfindliche Oberfläche ermittelt werden kann, ob der Fahrer F den Bestätigungsknopf 18 drückt. Ist als Benutzereingabe ermittelt worden, dass der Fahrer F den Bestätigungsknopf 18 gedrückt hat, dann wird dies als Bestätigung der vorgeschlagenen Windschattenfahrt interpretiert und infolgedessen das als potentielles Führungsfahrzeug 10 markierte Kraftfahrzeug tatsächlich als Führungsfahrzeug 10 für die Windschattenfahrt ausgewählt.

Als Führungsfahrzeug 10 für die Windschattenfahrt kann das weitere Kraftfahrzeug in Abhängigkeit von einer Klassifizierung des weiteren Kraftfahrzeugs als Personenkraftwagen oder als Lastkraftwagen und/oder einer Größe des weiteren Kraftfahrzeugs und/oder einer Geschwindigkeit des weiteren Kraftfahrzeugs und/oder einem Fahrstil des weiteren Kraftfahrzeugs und/oder einem zum Einscheren zur Verfügung stehenden Bereich hinter dem weiteren Kraftfahrzeug ausgewählt werden. Es ist möglich, dass die Größe des weiteren Kraftfahrzeugs mittels einer Kameraeinrichtung des Kraftfahrzeugs ermittelt wird. Alternativ oder zusätzlich ist es möglich, dass die Geschwindigkeit des weiteren Kraftfahrzeugs mittels einer Radareinrichtung des Kraftfahrzeugs ermittelt wird. Weiterhin alternativ oder zusätzlich ist es möglich, dass der zum Einscheren zur Verfügung stehende Bereich hinter dem weiteren Kraftfahrzeug mittels der Kameraeinrichtung und der Radareinrichtung des Kraftfahrzeugs ermittelt wird.

Nach Empfangen der die Windschattenfahrt bestätigenden Benutzereingabe kann mittels der elektronischen Recheneinrichtung das Führungsfahrzeug 10 für die Windschattenfahrt automatisiert ausgewählt werden und/oder das Kraftfahrzeug automatisiert in eine Folgefahrt hinter das Führungsfahrzeug 10 gebracht werden und/oder ein Abstand des Kraftfahrzeugs zu dem Führungsfahrzeug 10 während der Windschattenfahrt automatisiert eingestellt werden.

Während der Windschattenfahrt kann die bei der Windschattenfahrt eingesparte Energiemenge kontinuierlich überprüft werden und eine Aktion ausgelöst werden, wenn festgestellt wird, dass die bei der Windschattenfahrt eingesparte Energiemenge voraussichtlich nicht ausreicht, um einen Ladestopp tatsächlich einzusparen. Infolgedessen kann als Aktion die Windschattenfahrt automatisiert abgebrochen werden und/oder ein neues Führungsfahrzeug 10 für eine weitere Windschattenfahrt gesucht und ausgewählt werden und/oder eine Lademöglichkeitsinformation für den Fahrer F ausgegeben werden, insbesondere mittels der Ausgabeeinrichtung 12, wobei die Lademöglichkeitsinformation die Position wenigstens einer Ladestation charakterisiert.

In Fig. 2 ist eine Interaktion zwischen einem von der elektronischen Recheneinrichtung ausgeführten Energieassistenten E, dem Fahrer F des Kraftfahrzeugs sowie weiteren Komponenten K des Kraftfahrzeugs während des Unterstützens des Fahrers F beim Steuern des Kraftfahrzeugs für das Durchführen der Windschattenfahrt gezeigt. In Fig. 2 sind die Pfeile jeweils mit den Zahlen 1 bis 6 gekennzeichnet, wobei die jeweilige Pfeilrichtung charakterisiert, in welche Richtung eine Beeinflussung stattfindet.

Der erste Pfeil 1 charakterisiert, dass die Komponenten K des Kraftfahrzeugs an den Energieassistenten E Navigationsdaten, welche insbesondere einen Startort und/oder einen Zielort und/oder eine Routenlänge einer Fahrtroute charakterisieren, und/oder Positionsdaten, welche eine Position des Kraftfahrzeugs charakterisieren, sendet, sowie Informationen über den Energieverbrauch des Kraftfahrzeugs und den Ladezustand der Traktionsbatterie.

Alternativ teilen die Komponenten K des Kraftfahrzeugs dem Energieassistenten E zusätzlich die Größe und die Geschwindigkeit von vorausfahrenden weiteren Kraftfahrzeugen mit, sowie die Information, ob hinter den potentiellen Führungsfahrzeugen 10 genügend Abstand zum Einscheren vorliegt. Die Größe der vorausfahrenden weiteren Kraftfahrzeuge kann anhand der Silhouette des jeweiligen weiteren Kraftfahrzeugs mithilfe einer Frontkamera des Kraftfahrzeugs ermittelt werden. Die Geschwindigkeit der vorausfahrenden weiteren Kraftfahrzeuge kann insbesondere mithilfe eines Frontradars des Kraftfahrzeugs ermittelt werden. Der Abstand hinter den potentiellen Führungsfahrzeugen 10 zu weiteren Fahrzeugen kann mithilfe der Frontkamera und des Frontradars des Kraftfahrzeugs ermittelt werden.

Der Pfeil 2 symbolisiert, dass der Energieassistent E anhand dieser von den Komponenten K des Kraftfahrzeugs empfangenen Daten erkennt, ob der Fahrer F eine längere Fahrt plant, und prädiziert gegebenenfalls die Fahrtroute inklusive der Routenlänge. Hierbei kann der Energieassistent die Routenlänge aus einer Eingabe des Fahrers F an der Navigationseinrichtung oder als "die übliche Strecke zur Arbeit" ermitteln. Der Energieassistent E berechnet anhand der Routenlänge, den Energieverbrauchsdaten des Kraftfahrzeugs und des Ladezustands des Traktionsbatterie, dass ein Ladestopp bei geeigneter Windschattenfahrt vermieden werden kann. Hierbei ist es möglich, dass abgeschätzt wird, ob ein Ladestopp bei Windschattenfahrt eingespart werden kann. Dies kann ohne konkret bereits ausgewähltes Führungsfahrzeug 10 abgeschätzt werden, unter der Annahme, dass sich während der Fahrt des Kraftfahrzeugs ein als Führungsfahrzeug 10 geeignetes weiteres Kraftfahrzeug findet.

Der dritte Pfeil 3 charakterisiert, dass der Energieassistent E dem Fahrer F aktiv eine Windschattenfahrt vorschlägt, insbesondere ohne vorherige Aufforderung des Fahrers F. Hierbei informiert der Energieassistent E den Fahrer F darüber, welche Art von Führungsfahrzeug 10 der Fahrer F auswählen soll, wie Pkw, Kleintransporter oder Lkw, welche Geschwindigkeit das Führungsfahrzeug 10 haben soll, mit welchem Abstand das Kraftfahrzeug dem Führungsfahrzeug 10 folgen soll, wie viel Energie in Prozent oder in Kilowattstunden bei der Windschattenfahrt auf der Fahrtroute eingespart werden kann, wie viele Ladestopps vermieden werden können und/oder wie viel Fahrtzeit, insbesondere in Minuten, aufgrund des eingesparten Ladestopps eingespart werden können. Der Abstand kann dem Fahrer F in Form einer absoluten Längenangabe oder in Form einer Zeitlücke ausgegeben werden.

Im Rahmen dessen kann dem Fahrer F von dem Energieassistenten E angeboten werden, hinter dem Führungsfahrzeug 10 automatisch in Folgefahrt zu gehen, gegebenenfalls inklusive automatisiertem Fahrstreifenwechsel. Ebenfalls kann dem Fahrer F die Möglichkeit gegeben werden, diesen Vorschlag anzunehmen, beispielsweise über einen auf einem Touchscreen angezeigten Taster, vorliegend dem Bestätigungsknopf 18, oder über einen realen Taster im Kraftfahrzeug.

Es ist möglich, dass vom Fahrer F lediglich die grundsätzliche Bereitschaft für eine Windschattenfahrt abgefragt wird, ohne Angabe eines konkreten bereits ausgewählten Führungsfahrzeugs 10. Der Fahrer F hat die Möglichkeit, diesen Vorschlag anzunehmen, beispielsweise über das Betätigen des Bestätigungsknopfs 18, der durch einen Touchscreen dargestellt ist, oder über einen realen Taster im Kraftfahrzeug.

Der vierte Pfeil 4 charakterisiert, dass der Fahrer F den Vorschlag umsetzt, indem er ein geeignetes Führungsfahrzeug 10 gemäß Vorschlag des Energieassistenten E sucht, insbesondere hinsichtlich Art und Geschwindigkeit des Führungsfahrzeugs 10, gegebenenfalls einen Fahrstreifenwechsel durchführt, um hinter das geeignete Führungsfahrzeug 10 zu gelangen und hinter dem geeigneten Führungsfahrzeug 10 manuell in Folgefahrt geht.

Alternativ kann der Fahrer F eine adaptive Geschwindigkeitsregelung aktivieren und beispielsweise die vorgeschlagene Zeitlücke einstellen, nachdem der Fahrer F das Kraftfahrzeug manuell in Folgefahrt mit dem Führungsfahrzeug 10 gefahren hat. Alternativ kann durch den Pfeil 4 repräsentiert sein, dass der Fahrer F den Vorschlag des Energieassistenten E annimmt, indem er über den Bestätigungsknopfs 18 im Touchscreen die Folgefahrt bestätigt, gegebenenfalls inklusive Fahrstreifenwechsel. Infolgedessen kann das Kraftfahrzeug mittels einer Steuereinrichtung automatisiert in Folgefahrt mit dem Führungsfahrzeug 10 gebracht werden und eine vorgeschlagene Zeitlücke automatisiert eingestellt werden, gegebenenfalls inklusive Fahrstreifenwechsel. Dies erfolgt lediglich dann, wenn der Fahrer den Vorschlag für die Windschattenfahrt annimmt beziehungsweise bestätigt.

Alternativ ist es möglich, dass die elektronische Recheneinrichtung vollautomatisch, das bedeutet ohne weiteres Zutun des Fahrers F, ein geeignetes Führungsfahrzeug 10 auswählt, auslöst, dass das Kraftfahrzeug vollautomatisiert hinter diesem ausgewählten Führungsfahrzeug 10 mit einer von dem Energieassistenten E ausgewählten Zeitlücke in Folgefahrt geht, wobei hierfür gegebenenfalls ein vollautomatischer Fahrstreifenwechsel ohne Fahrerbestätigung durchgeführt wird.

Der Pfeil 5 repräsentiert, dass die Komponenten K des Kraftfahrzeugs dem Energieassistenten E jeweilige aktuelle, neue Verbrauchsdaten senden. Hierbei können die Komponenten K des Kraftfahrzeugs dem Energieassistenten E zusätzlich mitteilen, ob sich das Kraftfahrzeug in Folgefahrt zu dem Führungsfahrzeug 10 befindet und mit welcher Zeitlücke. Der Pfeil 6 repräsentiert, dass der Energieassistent E die tatsächlich eingesparte Energiemenge berechnet und auslöst, dass diese dem Fahrer F angezeigt wird. Falls eine prognostizierte Reichweitenerhöhung eintritt, dann löst der Energieassistent E aus, dass der Fahrer F hierüber informiert wird. Falls die prognostizierte Reichweitenerhöhung für die Windschattenfahrt nicht eintritt, dann löst der Energieassistent E aus, dass der Fahrer F hierüber informiert wird sowie zusätzlich über festgelegene Ladestationen. Der Energieassistent E kann bei seinen Berechnungen zusätzlich berücksichtigen, ob der Fahrer F den Vorschlag für die Windschattenfahrt angenommen hat und das Kraftfahrzeug hinter das Führungsfahrzeug 10 geführt hat zwecks Windschattenfahrt, sich das Kraftfahrzeug also in Folgefahrt befindet und der vorgeschlagene Abstand, insbesondere die vorgeschlagene Zeitlücke, eingestellt wurde.

Dem Fahrer F können die jeweiligen Informationen über die Ausgabeeinrichtung 12 mittels eines stilisierten Bilds oder mittels eines realen Bilds angezeigt werden. Hierbei können dem Fahrer F die jeweiligen Informationen in Textform oder in Diagrammform, insbesondere jeweilige mögliche Spareffekte, angezeigt werden. Hierbei können die Spareffekte dem Fahrer F beispielsweise als Balkendiagramm 16 im Nahbereich des jeweiligen weiteren Kraftfahrzeugs angezeigt werden. Als Empfehlung kann dem Fahrer F mittels der Ausgabeeinrichtung 12 beispielsweise angezeigt werden, dass einem Kleintransporter gefolgt werden soll, welcher beispielsweise mit einer Geschwindigkeit von 110 bis 120 Kilometern pro Stunde fährt und welchem mit einem Abstand von 30 bis 40 Metern gefolgt werden soll. In dem Beispielfall kann dem Fahrer F weiterhin angezeigt werden, dass der Spareffekt erreicht werden kann, dass ein Ladestopp weniger benötigt wird und/oder dass 25 Prozent Energie eingespart werden können und/oder dass zehn Minuten Fahrtzeit eingespart werden können.

Falls die Frontkamera die Fahrzeuggröße der vorausfahrenden weiteren Kraftfahrzeuge nicht anhand der Fahrzeugsilhouette erkennen kann, sondern weitere Kraftfahrzeuge nur pauschal klassifizieren kann, insbesondere als Pkw oder als Lkw, dann kann das Einsparpotential für eine Windschattenfahrt pauschal für eine bestimmte Art von Kraftfahrzeug, wie Pkw oder Lkw, bestimmt werden. Hierdurch ergeben sich bei der Berechnung des Einsparpotentials größere Ungenauigkeiten im Vergleich zu einem Verfahren, bei dem anhand der Fahrzeugsilhouette die Größe des jeweils vorausfahrenden weiteren Kraftfahrzeugs vergleichsweise präzise bestimmt werden kann. Bei der Auswahl des Führungsfahrzeugs 10 kann der Fahrstil potentieller Führungsfahrzeuge 10 beobachtet werden. Sollte ein potentielles Führungsfahrzeug 10 häufig Fahrstreifenwechsel durchführen oder seine Geschwindigkeit ändern, dann scheidet es als tatsächlich ausgewähltes Führungsfahrzeug 10 aus und wird insbesondere dem Fahrer F nicht als mögliches Führungsfahrzeug 10 angeboten. Sollte während der Folgefahrt sich der prognostizierte Verbrauchsvorteil nicht einstellen, beispielsweise weil das Führungsfahrzeug 10 häufig bremst und beschleunigt, ohne dass dies durch die aktuelle Verkehrslage motiviert ist, sondern eher auf einen aggressiven Fahrstil des aktuellen Führungsfahrzeugs 10 hindeutet, dann kann der Energieassistent E zu einem Abbruch der Windschattenfahrt beziehungsweise zu einem Wechsel des Führungsfahrzeugs 10 raten.

Ein aktives Vorschlagen einer Windschattenfahrt basierend auf einer Analyse der Routenplanung und dem Fahrverhalten des Fahrers F ermöglicht, dass ein Ladestopp vermieden werden kann und so Fahrtzeit und Energie gespart werden können.

Der Energieassistent E prädiziert die voraussichtliche Fahrtroute des Kraftfahrzeugs, analysiert die Fahrweise des Fahrers F und den Verbrauch des Kraftfahrzeugs. Basierend auf diesen Daten erkennt der Energieassistent E, ob ein Ladestopp durch Windschattenfahrt vermieden werden kann oder nicht vermieden werden kann. Ermittelt der Energieassistent E, dass durch Windschattenfahrt wenigstens ein Ladestopp vermieden werden kann, dann löst der Energieassistent E aus, dass dem Fahrer F aktiv eine Windschattenfahrt vorgeschlagen wird und dieser auf die Vorteile der Windschattenfahrt hingewiesen wird. Ist das Kraftfahrzeug mit einem geeigneten, längsregelnden Fahrerassistenzsystem ausgestattet, wie beispielsweise einer adaptiven Geschwindigkeitsregelung beziehungsweise einer automatischen Distanzregelung, dann kann der Abstand des Kraftfahrzeugs zum vorausfahrenden Führungsfahrzeug 10 bei Windschattenfahrt vom Fahrer F ausgewählt und vom Fahrerassistenzsystem automatisch eingehalten werden. Ist das Kraftfahrzeug mit einem geeigneten Fahrerassistenzsystem ausgestattet, welches das automatisierte Durchführen eines Fahrstreifenwechsels steuern kann, wie beispielsweise dem sogenannten Travel Assist, dann kann der Fahrer F einen Fahrstreifenwechsel in den Windschatten eines bestimmten vorausfahrenden Führungsfahrzeugs 10 bestätigen, und das Fahrerassistenzsystem führt den Fahrstreifenwechsel automatisch durch, wodurch das Kraftfahrzeug hinter dem ausgewählten Führungsfahrzeug 10 automatisch in Folgefahrt geht.

In einer alternativen Ausgestaltung möglich, dass der Energieassistent E den Fahrer F nicht nach einem bestimmten weiteren Kraftfahrzeug als Führungsfahrzeug 10 fragt, sondern vom Fahrer F lediglich abfragt, ob dieser grundsätzlich einverstanden ist, eine Windschattenfahrt durchzuführen. Bestätigt der Fahrer F beispielsweise mit einer Benutzereingabe, dass dieser grundsätzlich damit einverstanden ist, eine Windschattenfahrt durchzuführen, dann kann das Fahrerassistenzsystem des Kraftfahrzeugs eigenständig nach einem geeigneten Führungsfahrzeug 10 für die Windschattenfahrt suchen und auslösen, dass das Kraftfahrzeug automatisiert in Folgefahrt zu diesem ausgewählten Führungsfahrzeug 10 geht, gegebenenfalls mit vollautomatischem Fahrstreifenwechsel ohne zusätzliche Fahrerbestätigung.

Das beschriebene Verfahren ermöglicht, dass der Energieassistent E den Fahrer F aktiv auf die Vorteile einer Windschattenfahrt in seiner spezifischen Fahrsituation hinweist, also das Vermeiden eines Ladestopps und die daraus resultierenden Vorteile bei Reisezeit und Energieverbrauch.

Falls durch Windschattenfahrten kein Ladestopp vermieden werden kann, dann kann der Energieassistent E den Fahrer F über ein Energieeinsparpotential bei Windschattenfahrt ebenfalls aktiv informieren. Darüber hinaus kann der Energieassistent E auslösen, dass der Fahrer F über eine Änderung der voraussichtlichen Fahrtzeit informiert wird, welche sich verlängert, falls der Fahrer F einem Führungsfahrzeug 10 mit geringerer Geschwindigkeit als seiner aktuellen Reisegeschwindigkeit folgt.

Vorteilhaft an der vollautomatisierten beschriebenen Variante ist, dass lediglich besonders wenige Informationen an den Fahrer F ausgegeben werden. Dies ist der Fall, da sämtliche Detailentscheidungen, wie Auswahl des Führungsfahrzeugs 10, Fahrstreifenwechsel ja/nein und Zeitlücke, von dem Energieassistenten E getroffen werden.

Der beschriebenen Erfindung liegt die Erkenntnis zugrunde, dass das Fahren im Windschatten eines vorausfahrenden Fahrzeugs den Energieverbrauch des folgenden Fahrzeugs reduziert und die Reichweite des folgenden Fahrzeugs erhöht. Insbesondere für Elektrofahrzeuge ist dies von großer Bedeutung. Bekannt ist das Windschattenfahren für Kolonnen mit Abständen zwischen den Fahrzeugen von wenigen Metern. Es ist jedoch eine deutliche Energieeinsparung von mehreren Prozent auch dann möglich, wenn der Abstand zwischen vorausfahrendem Fahrzeug und Folgefahrzeug gesetzlichen Vorschriften genügt, also die Zeitlücke zwischen den Fahrzeugen beispielsweise mindestens 0,9 Sekunden beträgt.

Insgesamt zeigt die Erfindung, wie ein Energieassistent E zur Einsparung eines Ladestopps durch Windschattenfahrt genutzt werden kann.

### Bezugszeichenliste

- 10: Führungsfahrzeug
- 12: Ausgabeeinrichtung
- 14: Markierung
- 16: Balkendiagramm
- 18: Bestätigungsknopf
- V1 bis V5: jeweilige Verfahrensschritte
- 1 bis 6: jeweilige Pfeile
- K: Komponenten des Kraftfahrzeugs
- F: Fahrer
- E: Energieassistent

## Patentansprüche

1. Verfahren zum Assistieren eines Fahrers (F) beim Steuern eines elektrisch betreibbaren Kraftfahrzeugs, bei welchem mittels einer elektronischen Recheneinrichtung des Kraftfahrzeugs
- eine Fahrtroute des Kraftfahrzeugs ermittelt wird (V1),
- für die ermittelte Fahrtroute ein Energieverbrauch des Kraftfahrzeugs ermittelt wird (V2),
- anhand von Ladezustandsdaten ein Ladezustand einer Traktionsbatterie des Kraftfahrzeugs ermittelt wird (V3),
- anhand der Fahrtroute, des Energieverbrauchs und des Ladezustands ermittelt wird, ob bei einer Windschattenfahrt durch Energieeinsparung ein Ladestopp vermieden werden kann (V4), und
- falls ermittelt wird, dass bei der Windschattenfahrt durch Energieeinsparung ein Ladestopp vermieden werden kann, ausgelöst wird, dass dem Fahrer (F) vorgeschlagen wird die Windschattenfahrt durchzuführen (V5).

2. Verfahren nach Anspruch 1, wobei nach Empfangen einer Benutzereingabe vom Fahrer (F), welche eine Anweisung zum Durchführen der Windschattenfahrt charakterisiert, mittels der elektronischen Recheneinrichtung
- ein Führungsfahrzeug (10) für die Windschattenfahrt automatisiert ausgewählt wird und/oder
- das Kraftfahrzeug automatisiert in eine Folgefahrt hinter das Führungsfahrzeug (10) gebracht wird und/oder
- ein Abstand des Kraftfahrzeugs zu einem Führungsfahrzeug (10) während der Windschattenfahrt automatisiert eingestellt wird.

3. Verfahren nach Anspruch 1 oder 2, wobei ausgelöst wird, dass dem Fahrer (F) zusätzlich zum Vorschlagen der Windschattenfahrt wenigstens eine der folgenden Informationen angezeigt wird:
- welcher Art von Führungsfahrzeug (10) bei der Windschattenfahrt gefolgt werden soll,
- welche Geschwindigkeit das auszuwählende Führungsfahrzeug (10) aufweisen soll,
- mit welchem Abstand dem Führungsfahrzeug (10) während der Windschattenfahrt gefolgt werden soll,
- wieviel Energie bei der Windschattenfahrt auf der Fahrtroute eingespart werden kann,
- wie viele Ladestopps aufgrund der Windschattenfahrt vermieden werden können,
- wieviel Fahrzeit aufgrund des eingesparten Ladestopps eingespart werden kann.

4. Verfahren nach Anspruch 3, wobei der Abstand absolut als Längenangabe oder als Zeitlücke vorgegeben wird.

5. Verfahren nach einem der vorhergehenden Ansprüche, wobei als Führungsfahrzeug (10) für die Windschattenfahrt ein weiteres Kraftfahrzeug in Abhängigkeit von wenigstens einem der folgenden Kriterien ausgewählt wird:
- eine Klassifizierung des weiteren Kraftfahrzeugs als Personenkraftwagen oder als Lastkraftwagen,
- eine Größe des weiteren Kraftfahrzeugs,
- eine Geschwindigkeit des weiteren Kraftfahrzeugs,
- ein Fahrstils des weiteren Kraftfahrzeugs,
- ein zum Einscheren zur Verfügung stehender Bereich hinter dem weiteren Kraftfahrzeug.

6. Verfahren nach Anspruch 5, wobei die Größe des weiteren Kraftfahrzeugs mittels einer Kameraeinrichtung des Kraftfahrzeugs ermittelt wird und/oder die Geschwindigkeit des weiteren Kraftfahrzeugs mittels einer Radareinrichtung des Kraftfahrzeugs ermittelt wird und/oder der zum Einscheren zur Verfügung stehende Bereich hinter dem weiteren Kraftfahrzeug mittels der Kameraeinrichtung und der Radareinrichtung ermittelt wird.

7. Verfahren nach einem der vorhergehenden Ansprüche, wobei während der Windschattenfahrt eine eingesparte Energiemenge des Kraftfahrzeugs überprüft wird und eine Aktion ausgelöst wird, wenn festgestellt wird, dass die eingesparte Energiemenge nicht ausreicht, um einen Ladestopp einzusparen.

8. Verfahren nach Anspruch 7, wobei wenigstens eine der folgenden Aktionen durchgeführt wird:
- die Windschattenfahrt automatisiert abgebrochen wird,
- ein neues Führungsfahrzeug (10) für eine weitere Windschattenfahrt gesucht und ausgewählt wird,
- eine Lademöglichkeitsinformation für den Fahrer (F) ausgegeben wird, welche wenigstens eine Ladestation charakterisiert.

9. Elektronische Recheneinrichtung für ein Kraftfahrzeug, welche dazu eingerichtet ist, ein Verfahren nach einem der vorhergehenden Ansprüche durchzuführen.

10. Kraftfahrzeug, mit einer elektronischen Recheneinrichtung nach Anspruch 9.

## Claims

1. Method for assisting a driver (F) in controlling an electrically operated motor vehicle, in which method, by means of an electronic computing device of the motor vehicle,
- a route of the motor vehicle is determined (V1),
- an energy consumption by the motor vehicle is determined (V2) for the determined route,
- a state of charge of a traction battery of the motor vehicle is determined (V3) on the basis of state-of-charge data,
- it is determined, on the basis of the route, the energy consumption and the state of charge, whether a charging stop can be avoided (V4) by saving energy while slipstreaming, and
- if it is determined that a charging stop can be avoided by saving energy while slipstreaming, it is suggested to the driver (F) to perform (V5) said slipstreaming.

2. Method according to claim 1, wherein by means of the electronic computing device, after receiving a user input from the driver (F), which user input characterizes an instruction to perform said slipstreaming,
- a lead vehicle (10) for slipstreaming is automatically selected and/or
- the motor vehicle is automatically brought behind the lead vehicle (10) so as to follow it, and/or
- a distance from the motor vehicle to a lead vehicle (10) is automatically set during slipstreaming.

3. Method according to claim 1 or 2, wherein, in addition to suggesting slipstreaming, at least one of the following items of information is displayed to the driver (F):
- what type of lead vehicle (10) is to be followed while slipstreaming,
- what speed the lead vehicle (10) to be selected is to have,
- at what distance the lead vehicle (10) is to be followed during slipstreaming,
- how much energy can be saved on the route while slipstreaming,
- how many charging stops can be avoided due to slipstreaming,
- how much driving time can be saved due to the saved charging stop.

4. Method according to claim 3, wherein the distance is specified in absolute terms as a length specification or as a time gap.

5. Method according to any of the preceding claims, wherein a further motor vehicle is selected as the lead vehicle (10) for slipstreaming on the basis of at least one of the following criteria:
- a classification of the further motor vehicle as a passenger car or as a goods vehicle,
- a size of the further motor vehicle,
- a speed of the further motor vehicle,
- a driving style of the further motor vehicle,
- a region behind the further motor vehicle available for merging.

6. Method according to claim 5, wherein the size of the further motor vehicle is determined by means of a camera device of the motor vehicle and/or the speed of the further motor vehicle is determined by means of a radar device of the motor vehicle and/or the region behind the further motor vehicle available for merging is determined by means of the camera device and the radar device.

7. Method according to any of the preceding claims, wherein during slipstreaming a saved amount of energy of the motor vehicle is checked and an action is triggered if it is established that the saved amount of energy is not sufficient to avoid a charging stop.

8. Method according to claim 7, wherein at least one of the following actions is performed:
- slipstreaming is automatically canceled,
- a new lead vehicle (10) for further slipstreaming is sought and selected,
- charging possibility information is output to the driver (F), which charging possibility information characterizes at least one charging station.

9. Electronic computing device for a motor vehicle, which electronic computing device is designed to perform a method according to any of the preceding claims.

10. Motor vehicle, comprising an electronic computing device according to claim 9.

## Revendications

1. Procédé d'assistance à un conducteur (F) lors de la commande d'un véhicule automobile pouvant être actionné électriquement, dans lequel, par le biais d'un dispositif de calcul électronique du véhicule automobile
- un itinéraire de déplacement du véhicule automobile est déterminé (V1),
- une consommation d'énergie du véhicule automobile pour l'itinéraire de déplacement déterminé est déterminée (V2),
- un état de charge d'une batterie de traction du véhicule automobile est déterminé (V3) à l'aide de données d'état de charge,
- il est déterminé, à l'aide de l'itinéraire de déplacement, de la consommation d'énergie et de l'état de charge, si un arrêt de charge peut être évité par une économie d'énergie lors d'un déplacement dans l'aspiration (V4), et
- s'il est déterminé qu'un arrêt de charge peut être évité lors du déplacement dans l'aspiration grâce à une économie d'énergie, on déclenche le fait que l'on propose au conducteur (F) d'effectuer le déplacement dans l'aspiration (V5).

2. Procédé selon la revendication 1, dans lequel, après réception d'une entrée d'utilisateur du conducteur (F), qui caractérise une instruction pour la réalisation du déplacement dans l'aspiration, par le biais du dispositif de calcul électronique
- un véhicule de tête (10) est sélectionné de manière automatisée pour le déplacement dans l'aspiration et/ou
- le véhicule automobile est amené de manière automatisée dans un trajet de suivi derrière le véhicule de tête (10) et/ou
- une distance du véhicule automobile par rapport à un véhicule de tête (10) est ajustée de manière automatisée pendant le déplacement dans l'aspiration.

3. Procédé selon la revendication 1 ou 2, dans lequel on déclenche l'affichage au conducteur (F), en plus de la proposition de déplacement dans l'aspiration, d'au moins l'une des informations suivantes :
- quel type de véhicule de tête (10) doit être suivi lors du déplacement dans l'aspiration,
- quelle vitesse doit avoir le véhicule de tête (10) à sélectionner,
- à quelle distance le véhicule de tête (10) doit être suivi pendant le déplacement dans l'aspiration,
- quelle quantité d'énergie il est possible d'économiser lors du déplacement dans l'aspiration sur l'itinéraire de déplacement,
- combien d'arrêts de charge peuvent être évités en raison du déplacement dans l'aspiration,
- combien de temps de déplacement peut être économisé en raison de l'arrêt de charge économisé.

4. Procédé selon la revendication 3, dans lequel la distance est prédéfinie de manière absolue sous forme d'indication de longueur ou sous forme d'intervalle de temps.

5. Procédé selon l'une des revendications précédentes, dans lequel comme véhicule de tête (10) pour le déplacement dans l'aspiration un autre véhicule automobile est choisi en fonction d'au moins l'un des critères suivants :
- une classification de l'autre véhicule automobile comme voiture particulière ou comme camion,
- une taille de l'autre véhicule automobile,
- une vitesse de l'autre véhicule automobile,
- un style de conduite de l'autre véhicule automobile,
- une zone disponible pour s'insérer derrière l'autre véhicule automobile.

6. Procédé selon la revendication 5, dans lequel la taille de l'autre véhicule automobile est déterminée par le biais d'un dispositif de caméra du véhicule automobile et/ou la vitesse de l'autre véhicule automobile est déterminée par le biais d'un dispositif de radar du véhicule automobile et/ou la zone disponible pour s'insérer derrière l'autre véhicule automobile est déterminée par le biais du dispositif de caméra et du dispositif de radar.

7. Procédé selon l'une des revendications précédentes, dans lequel une quantité d'énergie économisée par le véhicule automobile est vérifiée pendant le déplacement dans l'aspiration et une action est déclenchée lorsqu'il est établi que la quantité d'énergie économisée n'est pas suffisante pour économiser un arrêt de charge.

8. Procédé selon la revendication 7, dans lequel au moins l'une des actions suivantes est réalisée :
- le déplacement dans l'aspiration est interrompu de manière automatisée,
- un nouveau véhicule de tête (10) est recherché et sélectionné pour un nouveau déplacement dans l'aspiration,
- une information de possibilité de charge est émise pour le conducteur (F), laquelle caractérise au moins une station de charge.

9. Dispositif de calcul électronique pour un véhicule automobile, qui est conçu pour réaliser un procédé selon l'une des revendications précédentes.

10. Véhicule automobile comportant un dispositif de calcul électronique selon la revendication 9.
